(19) **Europäisches Patentamt**
**European Patent Office**
**Office européen des brevets**

(11) **EP 4 287 485 A1**

(12) **EUROPEAN PATENT APPLICATION**

(43) Date of publication:
**06.12.2023 Bulletin 2023/49**

(21) Application number: **23176576.9**

(22) Date of filing: **01.06.2023**

(51) International Patent Classification (IPC):
***H02M 3/335*** (2006.01)      ***H02M 3/00*** (2006.01)

(52) Cooperative Patent Classification (CPC):
**H02M 3/33573; H02M 3/01; H02M 3/33584;
H02M 3/33592**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.06.2022 EP 22176824**

(71) Applicant: **MAHLE International GmbH
70376 Stuttgart (DE)**

(72) Inventors:
 • **DELCANTO, Pablo
   46021 Valencia (ES)**

 • **ESMORIS BERTOA, Antón
   46010 Valencia (ES)**
 • **FIGUERES, Emilio
   46980 Paterna (ES)**
 • **GARCERA, Gabriel
   46015 Valencia (ES)**
 • **JORDAN HERREO, Donato
   46178 La Yesa (ES)**

(74) Representative: **BRP Renaud & Partner mbB
Rechtsanwälte Patentanwälte
Steuerberater
Königstraße 28
70173 Stuttgart (DE)**

(54) **DC-DC POWER CONVERTER AND METHOD**

(57) The invention relates to an electrical DC-DC power converter (1). This comprises a high-voltage electrical side (2) electrically connectable to a high-voltage battery (30), which comprises an H-full bridge circuit (3) with four high-voltage side halfconductor switches (3a-3d). These four semiconductor switches (3a-3d) can each be independently switched between an inactive state and an active state. Furthermore, the power converter (1) comprises an electrical low-voltage side (4) electrically connectable to a low-voltage battery (31), which comprises an H-full bridge circuit (5) with four low-voltage side semiconductor switches (5a-5d), These four semiconductor switches (5a-5d) can each be switched independently of one another between an inactive state and an active state. Furthermore, the high-voltage side (2) with its H-full-bridge circuit (3) and its four high-voltage-side semiconductor switches (3a-3d) is inductively connected to the low-voltage side (4) with its H-full-bridge circuit (5) and its four high-voltage-side semiconductor switches (5a-5d) by means of an electrical transformer (10) for electrical power transmission between the high-voltage side (2) and the low-voltage side (4).

Fig. 1

**EP 4 287 485 A1**

## Description

The invention relates to a DC-DC power converter and to a power converter arrangement comprising such a DC-DC power converter. The invention further relates to a method for operating such a DC-DC power converter.

Electric DC-DC power converters are used in modern electric vehicles. The converters are used to transfer electrical power or energy between a high-voltage battery and a low-voltage battery of the electric vehicle. The high-voltage battery is usually used to provide electrical energy to drive the electric vehicle. The low-voltage battery is typically used to supply electrical energy to other electrical consumers of the electric vehicle. The power converter can also be used to charge the high-voltage battery with electrical energy from an external electrical power supply. Accordingly, there are a plurality of different operating modes in which the power converter can be operated.

It is an object of the present invention to create an improved embodiment for a DC-DC converter, by means of which electrical energy can be transferred between a high-voltage battery and a low-voltage battery and which also permits the implementation of various operating modes, in particular for power transfer both from the high-voltage side and to the low-voltage side and also in the reverse direction and - independently of this - also in arrangements or topologies in which two or more such power converters are connected in cascade with one another.

This object is achieved by the subject-matter of the independent patent claims. Preferred embodiments are the subject of the dependent patent claims.

Accordingly, the basic idea of the present invention is to equip a DC-DC power converter in each case with a high-voltage-side and a low-voltage-side H-full-bridge circuit, each comprising four controllable semiconductor switches, the two H-full-bridge circuits being inductively coupled to one another via an electrical transformer. The provision of an H-full bridge circuit both on the high-voltage side and on the low-voltage side permits, on the one hand, a variable and flexible setting of how much electrical power is to be transmitted - for example by means of pulse width modulation - through appropriate control of the respective semiconductor switches. On the other hand, different operating modes can be implemented by appropriate control of the respective semiconductor switches, which can differ in particular in whether electrical power is to be transmitted from the high-voltage side to the low-voltage side or in the opposite direction, i.e. from the low-voltage side to the high-voltage side.

Since the DC-DC power converter according to the invention presented here has a technically simple design, an electrical fine-tuning of the individual electrical components of the power converter, in particular of the resonant elements present in the converter, i.e. inductive and capacitive elements, can also be determined in a very simple manner.

In detail, the electrical DC-DC power converter according to the invention comprises an electrical high-voltage side which can be electrically connected to a high-voltage battery and which comprises an H-full-bridge circuit with four high-voltage-side semiconductor switches. These four high-voltage side semiconductor switches can each be switched independently between an inactive state and an active state. Furthermore, the power converter comprises an electrical low-voltage side that can be electrically connected to a low-voltage battery and comprises an H-full-bridge circuit with four low-voltage-side semiconductor switches. These four low-voltage-side semiconductor switches can each be switched independently of one another between an inactive state and an active state. Furthermore, the high-voltage side with its H-full-bridge circuit and its four high-voltage-side semiconductor switches is inductively connected to the low-voltage side with its H-full-bridge circuit and its four high-voltage-side semiconductor switches by means of an electrical transformer for electrical power transmission between the high-voltage side and the low-voltage side.

In a preferred embodiment, the high-voltage side comprises a high-voltage terminal electrically connected to the high-voltage side H-full bridge circuit for connecting the high-voltage battery. Alternatively, or additionally, in this embodiment, the low-voltage side comprises a low-voltage connection, electrically connected to the low-voltage-side H-full bridge circuit, for connecting the low-voltage battery. This makes it possible to implement an embodiment which, in addition to the power converter according to the invention, contains only the high-voltage and low-voltage battery to be supplied with electrical power and is thus very simple in design.

According to an advantageous further development, an inductance LR and a capacitance CR can be arranged electrically in series with each other between the high-voltage side H-full bridge circuit and the transformer. In this way, the transmission characteristics of the power converter, in particular of its transformer, especially with regard to the transmission frequency by means of which electrical power can be transmitted between the high-voltage side and the low-voltage side with the aid of pulse-width modulation, can be determined in a simple manner.

The invention also relates to a power converter arrangement with a (first) DC-DC electrical power converter as presented above. The advantages of the power converter according to the invention explained above are therefore also transferred to the power converter arrangement according to the invention. Furthermore, the power converter arrangement comprises a (first) electric high-voltage battery electrically connected to the high-voltage side and an electric low-voltage battery electrically connected to the low-voltage side. Such an arrangement has a very simple technical design and is thus inexpensive to manufacture.

In an advantageous further development of the arrangement, a high-voltage-side filter device for filtering electrical voltage peaks is arranged between the (first) high-voltage battery and the high-voltage-side H-full bridge circuit. Alternatively, or additionally, in this further development, a low-voltage filter device for filtering electrical voltage peaks can be arranged between the low-voltage battery and the low-voltage H-full bridge circuit. This supports a particularly low-interference transmission of electrical energy between the high-voltage and low-voltage sides.

According to a further advantageous further development of the power converter arrangement according to the invention, the arrangement comprises a second electrical DC-DC power converter according to the invention. In this case, the high-voltage side of the first DC-DC electrical power converter including the high-voltage battery is electrically connected to the low-voltage side of the second DC-DC power converter. Furthermore, the power converter arrangement comprises an additional high-voltage electrical battery electrically connected to the high-voltage side of the second DC-DC electrical power converter. Such a bidirectional power converter topology can be used particularly advantageously in an electric vehicle if there are two high-voltage electrical systems with two high-voltage batteries.

In another advantageous further development, a second electrical DC-DC power converter can be arranged electrically in parallel with the low-voltage battery in the low-voltage side, which is electrically connected with its high-voltage side to the transformer of the first electrical DC-DC power converter and is electrically connected with its low-voltage side to an electrical energy source. In this arrangement, the high-voltage battery can be electrically charged with electrical energy from the energy source via the low-voltage battery and the two power converters arranged between the low-voltage battery and the high-voltage battery or the low-voltage battery and the energy source.

The invention further relates to a method for operating a power converter according to the invention as described above. The advantages of the power converter according to the invention explained above therefore also transfer to the method according to the invention. In the method according to the invention the power converter is switched to a first or second operating mode for transferring electrical power from the low-voltage side to the high-voltage side. Both the first and the second operating mode are used to provide electrical power from the low-voltage side to the high-voltage side, i.e. to transfer electrical power from the low-voltage side. In both the first and the second operating mode, a "backward" electrical power current is thus generated from the low-voltage side to the high-voltage side.

The two operating modes differ in that in the first operating mode an alternating voltage is induced in the high-voltage side, which in the first operating mode comprises the secondary side of the transformer, which is smaller than the alternating voltage provided in the low-voltage side, i.e. the primary side. In contrast, in the second operating mode, an AC voltage is induced in the high-voltage side, which is also the secondary side of the transformer in the second operating mode, that is greater than the AC voltage provided in the low-voltage side, i.e. the primary side of the transformer.

In the first operating mode, this is an operating mode in which the power converter acts as a so-called "buck converter" or "buck-boost converter". This operating mode is also known as "buck mode". The "buck mode", i.e. the first operating mode, is typically used when an electrically discharged high-voltage battery is to be charged with electrical energy from the low-voltage battery.

The second operating mode, on the other hand, is an operating mode in which the power converter acts as a so-called "boost converter" or "boost converter". This operating mode is also known as "boost mode". The "boost" mode, i.e. the second operating mode, is typically used when the electrically partially charged high-voltage battery is to be further charged with electrical energy from the low-voltage battery.

To provide electrical power from the high-voltage side to the low-voltage side, i.e. to transfer electrical energy from the high-voltage side to the low-voltage side, the power converter can be switched to a third operating mode. In this operating mode, there is a "forward" electrical power flow from the high-voltage side to the low-voltage side of the power converter. Thus, electrical power is transferred from the high voltage side to the low voltage side. The third operating mode is typically used when the low-voltage battery is not to be charged by means of an external electrical power supply, but by means of the electrical energy stored in the high-voltage battery from the high-voltage battery.

In both the first and second operating modes, power can be transferred by means of pulse width modulation by switching the four semiconductor switches on the non-voltage side between their inactive and active states. Furthermore, in the first mode of operation, all four semiconductor switches on the high-voltage side are switched to the inactive state, so that the high-voltage side H-full bridge circuit acts as a diode rectifier.

In contrast, in the second operating mode, only a first and a second of the four semiconductor switches of the high-voltage side are switched to the inactive state. In contrast to the first operating mode, a third and a fourth of the four semiconductor switches are switched between the inactive state and the active state by means of pulse width modulation at a constant frequency.

In the third operating mode, power is transferred from the high-voltage to the low-voltage side by means of pulse-width modulation in the process according to the invention by switching the four semiconductor switches on the high-voltage side between their inactive and active states. All four semiconductor switches on the low-voltage side are switched to the inactive state, so that the high-voltage side H-full bridge circuit acts as a diode rectifier.

In a preferred embodiment of the invention, in the first mode of operation, the switching of at least the first and second of the four low-voltage side semiconductor switches occurs at a predetermined frequency. Furthermore, in this embodiment, in the first operating mode, a time period that elapses between the switching of the first semiconductor switch and the second of the four low-voltage-side semiconductor switches is fixed such that the associated phase shift between the switching is at most 180°.

In a preferred embodiment, the switching of at least the first and the second of the four low-voltage-side semiconductor switches also takes place with a predetermined frequency in the second operating mode. Here, however, the time period - in contrast to the first operating mode - that elapses between the switching of the first semiconductor switch and the second of the four low-voltage semiconductor switches is set such that the phase offset between the switching is essentially 180°, preferably exactly 180°. In addition, in this variant, the third and fourth high-voltage side semiconductor switches are switched over with a frequency that is twice as high as the frequency with which the first and second low-voltage side semiconductor switches are switched over.

According to an advantageous further development, in both the first and the second operating mode, the predetermined frequency can be set in such a way that

$$f_{SW\_LV} > \frac{1}{2 \cdot \pi \cdot \sqrt{L_R \cdot C_R}}$$

is fulfilled. Here, $L_R$ is an inductance and $C_R$ is a capacitance, which are electrically connected in series with each other between the H-full bridge circuit and the transformer.

Further important features and advantages of the invention will be apparent from the sub-claims, from the drawings and from the accompanying figure description based on the drawings.

In an advantageous further development of the method according to the invention for operating the arrangement explained above with two power converters according to the invention. According to this further development, both power converters are operated in the first operating mode until a battery voltage of the high-voltage battery of the first or second power converter has reached a predetermined threshold value. When the threshold value is reached or exceeded, the relevant power converter is switched to the second operating mode. By means of this procedure, the operability of the low-voltage battery can be tested.

It is understood that the above-mentioned features and the features to be explained below can be used not only in the respective combination indicated, but also in other combinations or in a stand-alone position, without leaving the scope of the present invention.

Preferred examples of embodiments of the invention are shown in the drawings and are explained in more detail in the following description, wherein the same reference signs refer to identical or similar or functionally identical components.

They show, schematically in each case:

Fig. 1 an example of a power converter according to the invention,

Fig. 2 shows an example of a power converter arrangement according to the invention with the power converter of Fig. 1, which is connected with its high-voltage side to a high-voltage battery and with its low-voltage side to a low-voltage battery,

Fig. 3 a diagram explaining the time switching sequence of the low voltage side semiconductor switches in the first operating mode,

Fig. 4 a diagram explaining the time switching sequence of the low voltage side semiconductor switches in the second operating mode,

Fig. 5 a first application example, in which the arrangement of Fig. 2 is supplemented by a second power converter according to the invention as shown in Fig. 1,

Fig. 6 a second application example, in which the arrangement of Fig. 2 is supplemented by a second power converter according to the invention as shown in Fig. 1.

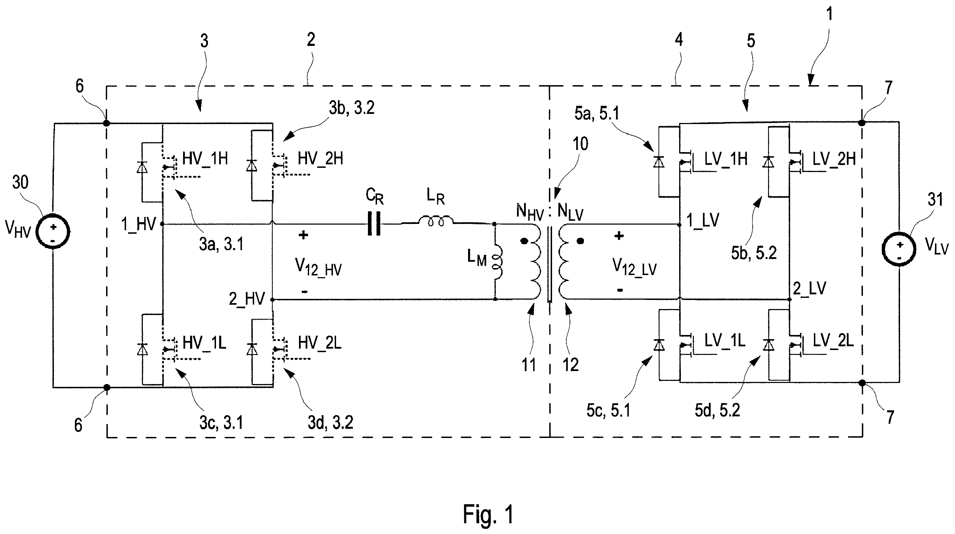

Figure 1 illustrates in schematic form an example of a DC-DC power converter 1 according to the invention, which for the sake of simplicity will also be referred to as "power converter" in the following. Specifically, the power converter 1 comprises a high-voltage electrical side 2 electrically connected to a high-voltage battery 30, which is not part of the power converter 1. The high-voltage side 2 in turn comprises a full-bridge H-circuit 3 having four high-voltage side semiconductor switches 3a-3d. The four high-voltage side semiconductor switches 3a-3d can each be independently switched between an inactive state and an active state AZ. The high-voltage side 2 further comprises a high-voltage terminal 6 electrically connected to the high-voltage side H-full-bridge circuit 3 for connecting the high-voltage battery 30. The semiconductor switches 3a-3d of the high-voltage side H-full-bridge circuit 3 may each be formed by a field-effect transistor (FET), in particular by a metal-oxide field-effect transistor (MOSFET), with an intrinsic "body diode".

Furthermore, the power converter 1 comprises an electrical low-voltage side 4 electrically connectable to a low-voltage battery 31, which is not part of the power converter 1. For this purpose, the low-voltage side 4 has a low-voltage terminal 7 electrically connected to the H-full bridge circuit 3 on the non-voltage side for connecting the low-voltage battery 31. The low-voltage side 4 further comprises an H-full bridge circuit 5 with four low-voltage side semiconductor switches 5a-5d. The four low-voltage side semiconductor switches 5a-5d can also each be independently switched between an inactive state IAZ and an active state AZ. Also, the semiconductor switches 5a-5d of the low-voltage side H full-bridge circuit 5 may each be formed by a field-effect transistor (FET), in particular a metal-oxide field-effect transistor (MOSFET), with intrinsic body diode.

The semiconductor switches 3a-3d and 5a-5d or field effect transistors can be switched by means of a control terminal ("gate"; not shown) between an active state AZ, in which an electric current can flow between a source terminal and a drain terminal along a source-drain channel, and an inactive state IAZ, in which this electric current flow is inhibited.

The first and third semiconductor switches 3a, 3c form a first switch pair 3.1, the second and fourth semiconductor switches 3b, 3d form a second switch pair 3.2 of the high-voltage side H full-bridge circuit 3. The first and third semiconductor switches 5a, 5c form a first switch pair 5.1, the second and fourth semiconductor switches 5b, 5d form a second switch pair 5.2 of the low-voltage side H full-bridge circuit 5.

Furthermore, the high-voltage side 2 with its H-full-bridge circuit 3 and its four high-voltage-side semiconductor switches 3a-3d is inductively connected to the low-voltage side 4 and its H-full bridge circuit 5 with its four high-voltage-side semiconductor switches 5a-5d by means of an electrical transformer 10 for electrical power transmission between the high-voltage side 2 and the low-voltage side 4.

The transformer 10 comprises a first coil 11 electrically connected to the high-voltage side H-full-bridge circuit 3 and a second coil 12 electrically connected to the low-voltage side H-full-bridge circuit 5. The two coils 11, 12 can be inductively coupled to each other for wireless transmission of electrical energy between the high-voltage side 3 and the low-voltage side 5. Depending on the operating mode of the power transformer 1, the first coil 11 may act as the primary coil and the second coil 12 may act as the secondary coil 12 of the transformer 1, or vice versa. The transformer 10 may have a transformer core, for example made of ferrite, which is not shown in more detail, by means of which the field line characteristic of the magnetic field generated by the coils 11, 12 when electrically energized can be influenced and optimized. This can improve the efficiency of the transformer 10 in transmitting electrical power between the two coils 11, 12. Furthermore, an inductance $L_R$ and a capacitance $C_R$ are electrically connected in series with each other between the high-voltage side H full-bridge circuit 3 and the transformer 10. As resonance elements, these determine the resonance characteristics of the transformer 10, in particular its resonance frequency.

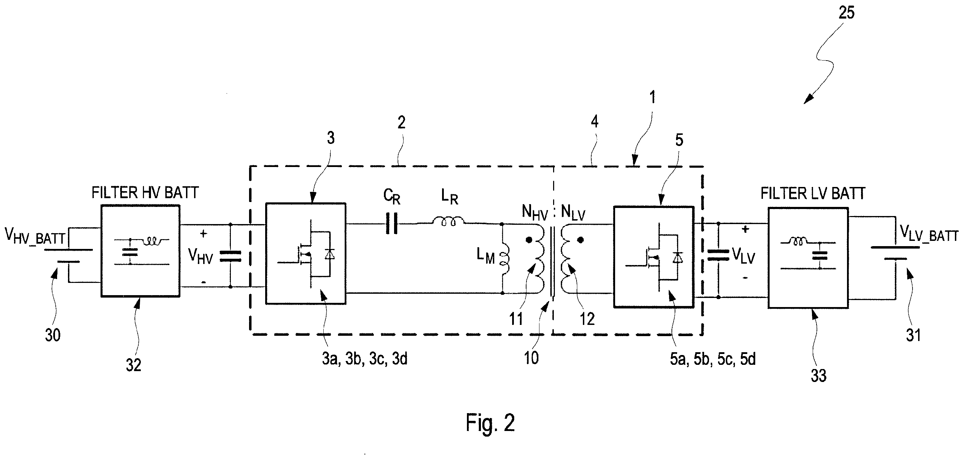

The power converter 1 shown in Figure 1 can be part of a power converter arrangement 25 shown in Figure 2 - also in the form of a circuit diagram. According to Figure 2, the power converter arrangement 25 comprises, in addition to the power converter 1, a first electric high-voltage battery 30 electrically connected to the high-voltage terminal 6 of the high-voltage side 2 and an electric low-voltage battery 31 electrically connected to the low-voltage terminal 7 of the low-voltage side 3. Furthermore, between the first high-voltage battery 30 and the high-voltage side H-full bridge circuit 3, a high-voltage side filtering device 32 of the arrangement 25 for filtering electrical voltage peaks is arranged. Similarly, a low-voltage filter device 33 of the arrangement 25 for filtering electrical voltage peaks is arranged between the low-voltage battery 31 and the low-voltage H-full bridge circuit 5.

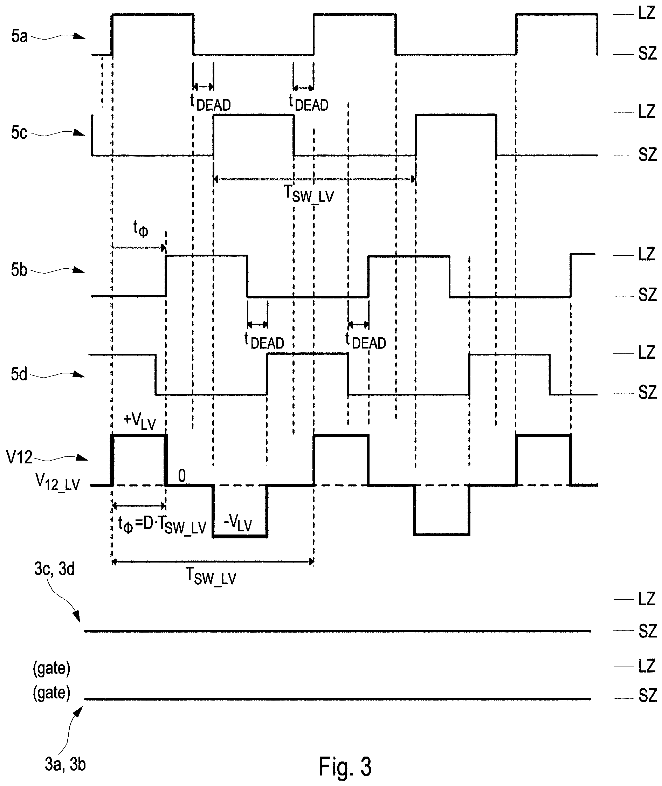

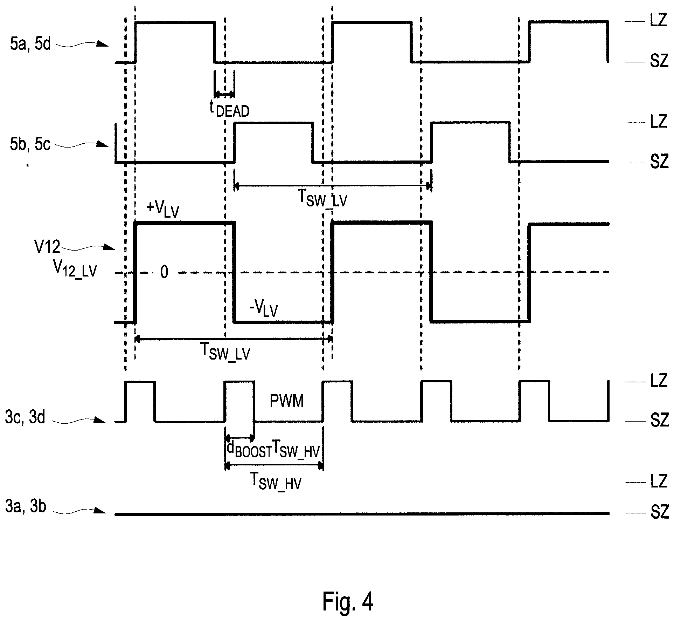

In the following, with the aid of Figures 3 and 4, the method according to the invention for operating the power converter 1 explained above will be explained. In the method, the power converter 1 is switched to a first or second operating mode for transmitting electrical power from the low-voltage side 4 to the high-voltage side 2. For transmitting electrical power P3 from the high-voltage side 2 to the low-voltage side, the power converter 1 is switched to a third operating mode. In both the first operating mode and the second operating mode, the electrical power is transmitted by means of pulse width modulation (PWM). In the second operating mode, the pulse width modulation is performed by switching the four low-voltage semiconductor switches 5a-5d between their inactive and active states IAZ, AZ accordingly, as shown by the diagram of Figure 3.

In Figure 3, the x-axis is a time axis (t-axis). On the y-axis the momentary switching state of the respective semiconductor switch 5a-5d, i.e. active state AZ or inactive state IAZ is plotted.

In the first operating mode, all four semiconductor switches 3a-3d of the high-voltage side 2 are switched to the inactive state IAZ as shown in Figure 3, so that the high-voltage side H-full bridge circuit 3 acts as a diode rectifier (not shown in Figure 3). Furthermore, in the first mode of operation, the four low-voltage semiconductor switches 5a, 5b, 5c, 5d are each switched between the inactive state IAZ and the active state AZ at a predetermined frequency $F_{SW-LV}$. The two semiconductor switches 5a, 5c of the first switching pair 5.1 are switched 180° out of phase with each other. Similarly, the two semiconductor switches 5b, 5d of the second switch pair 5.1 are switched 180° out of phase with each other.

The periodic time durations in which the two semiconductor switches 5a, 5c of the first switch pair 5.1 are in the active state AZ can be reduced by a few % compared to the time durations in which they are in the inactive state IAZ - this is represented in Figure 3 by a dead time $t_{dead}$ - in order to prevent an electrical short circuit due to a simultaneous active state AZ in the first and third semiconductor switches 5a, 5c. Similarly, the periodic time durations in which the two semiconductor switches 5b, 5d of the second switch pair 5.2 are in the active state AZ can be reduced by a few % compared to the time durations in which they are in the inactive state IAZ - this is represented in Figure 3 by a dead time $t_{dead}$ - in order to prevent an electrical short-circuit due to a simultaneously present active state AZ in the second and fourth semiconductor switches 5b, 5d.

Referring to Figure 3, in the first operation mode, a time period $t_\phi$ that elapses between the switching of the first low-voltage side semiconductor switch 5a and the second low-voltage side semiconductor switch 5b respectively between the switching between the inactive state IAZ and the active state AZ is set so that the phase offset D is at most 180°. Here $t_\phi = D * f_{SW\text{-}LV}$ applies. The same applies to the phase offset between the third and fourth low-voltage semiconductor switches 5c, 5d. The time period $t\Phi$ and the phase offset D, respectively, determine how much power is to be transferred from the low-voltage side 4 to the high-pressure side 2.

In the first operating mode, the induced voltage $V_{HV} <= V_{LV} (N_{HV}/N_{LV})$ induced in the first coil 11 on the high-voltage side is $V_{LV}$, where $V_{LV}$ is the primary voltage provided at the second coil 12 and $N_{HV}$ and $N_{LV}$ are the number of windings of the first and second coils, respectively.

The primary voltage $V_{12\_LV}$ generated in the first coil 12 by the transformer is shown in Figure 3 and denoted by the reference symbol V12.

Figure 4 is a representation corresponding to Figure 3 for the second operating mode of the power converter 1. According to Figure 4, in the second operating mode - in contrast to the first operating mode according to Figure 3 - only the first and second semiconductor switches 3a, 3b of the high-voltage side 2 are switched to the inactive state IAZ as shown in Figure.

Furthermore, in the second operating mode, the four low-voltage semiconductor switches 5a-5d are each switched between the inactive state IAZ and the active state AZ at a predetermined frequency $f_{SW\_LV}$ in a manner analogous to the first operating mode. Here, the two semiconductor switches 5a, 5c of the first switch pair 5.1 are switched 180° out of phase with each other. Similarly, the two semiconductor switches 5b, 5 of the second switch pair 5.2 are switched 180° out of phase with each other.

The periodic time durations in which the two semiconductor switches 5a, 5c of the first switch pair 5.1 are in the active state AZ can be reduced by a few % compared to the time durations in which they are in the inactive state IAZ - this is represented in Figure 4 as in Figure 3 by a dead time $t_{dead}$ - in order to prevent an electrical short circuit due to a simultaneous active state AZ in the first and third semiconductor switches 5a, 5c. Similarly, the periodic time durations in which the two semiconductor switches 5b, 5d of the second switch pair 5.2 are in the active state AZ can be reduced by a few % compared to the time durations in which they are in the inactive state IAZ - this is represented in Figure 4 as in Figure 3 by a dead time $t_{dead}$ - in order to prevent an electrical short circuit due to a simultaneous active state AZ in the second and fourth semiconductor switches 5b, 5d.

In the second operating mode, the time $t_\phi$ that elapses between the switching of the first low-voltage side semiconductor switch 5a and the third low-voltage side semiconductor switch 5c respectively between the inactive state IAZ and the active state AZ is set - in contrast to the first operating mode - such that the phase offset D between the switching is exactly 180°. The same applies to the phase offset between the second and fourth low-voltage semiconductor switches 5b, 5d.

In addition, in this variant, the third and fourth high-voltage half-wave switches 3c, 3d are switched - relative to each other in phase - between the active state AZ and the inactive state IAZ with a constant frequency $f_{SW\_HV}$, which is twice as large as the frequency $f_{SW\_LV}$ with which the first and second low-voltage semiconductor switches 5a, 5b are switched. Thus, $f_{SW\_HV} = 2 * f_{SW\_LV}$ is valid.

In both the first and the second operating mode, the predetermined frequency $f_{SW\_LV}$ is set in such a way that

$$f_{SW\_LV} > \frac{1}{2 \cdot \pi \cdot \sqrt{L_R \cdot C_R}}$$

is fulfilled. Here $L_R$ is the already mentioned inductance and $C_R$ the already mentioned capacitance of the power converter 1.

The primary voltage $V12\_LV$ generated in the first coil 12 by means of the low-voltage side semiconductor switches 5a-5d is shown in Figure 4 and marked with the reference line V12.

In the third operating mode, power is transferred from the high-voltage side 2 to the low-voltage side 4 by means of pulse width modulation (PWM) by corresponding switching of the four high-voltage side semiconductor switches 3a-3d between their inactive and active states IAZ, AZ. The exact sequence of switching of the four semiconductor switches 3a-3d is known to the relevant specialist, so that no further explanation is given in this respect. All four semiconductor switches 5a-5d of the low-voltage side 4 are switched to the inactive state IAZ in the third operating mode, so that the high-voltage side H-full bridge circuit 3 functions as a diode rectifier. The structure of such a diode rectifier is also known to the relevant skilled person, so that more detailed explanations are dispensed with in this respect.

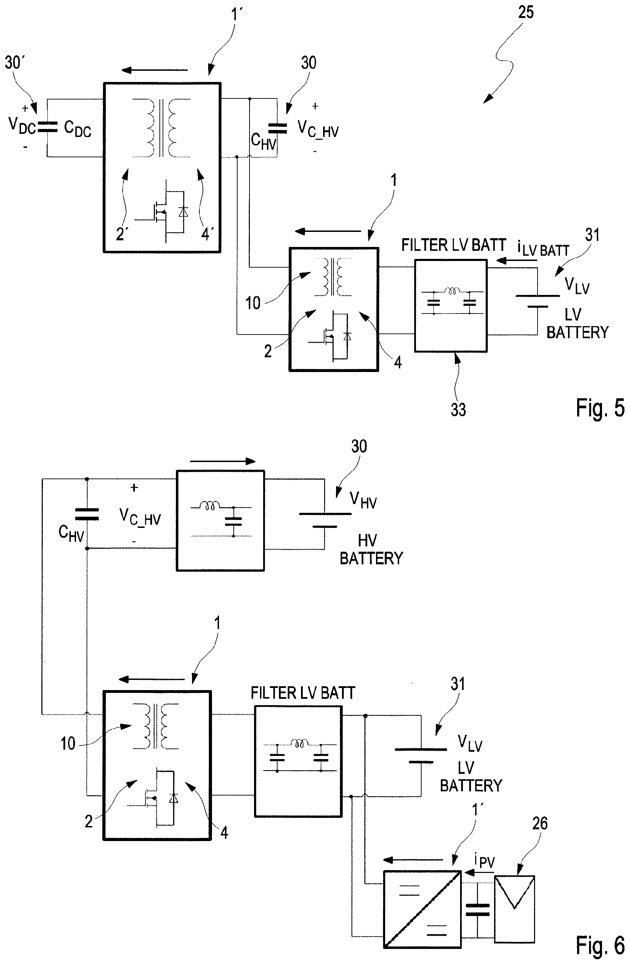

Figure 5 shows an application example of the DC-DC power converter 1 according to the invention in the power converter arrangement 25 according to the invention. In the example of Figure 5, the arrangement 25 is supplemented by a further, second electrical DC-DC power converter 1' according to the invention. Here, the high-voltage side 2 of the electric DC-DC power converter 1 shown in Figures 1 and 2 - this is referred to as the "first power converter 1" in connection with the example of Figure 5 - including the high-voltage battery 30 is electrically connected to the low-voltage side 4' of the second DC-DC power converter 1'. In the application example of Figure 5, the power converter arrangement 25 further comprises an additional electric high voltage battery 30' electrically connected to the high voltage side 2' of the second electric DC-DC power converter 1'. In the arrangement 25 of Figure 5, both power converters 1, 1' are operated in the first operating mode until a battery voltage of the high-voltage battery 30, 30' of the first or second power converter 1, 1' has reached a predetermined threshold value. When the threshold value is reached or exceeded, the relevant power converter is then switched to the second operating mode.

Figure 6 shows a further application example of the power converter arrangement 25 according to the invention. Here, a second electric DC-DC power converter 1' is arranged electrically in parallel with the low-voltage battery 31 in the low-voltage side 4, and its high-voltage side 2' is electrically connected to the transformer 10 of the first electric DC-DC power converter 1. In addition, the second DC-DC electrical power converter 1' is electrically connected with its low-voltage side 4' to an electrical power source 26. In this arrangement, the electrical energy source 26 can be used to electrically charge the high-voltage battery 30. For this purpose, both power converters 1, 1' are operated in the first or second operating module.

**Claims**

1. A DC-DC electrical power converter (1), in particular for an electric vehicle,

   - having an electrical high-voltage side (2) which can be electrically connected to a high-voltage battery (30) and comprises an H-full-bridge circuit (3) having four high-voltage-side semiconductor switches (3a-3d) which are each designed to be switchable independently of one another between an inactive state (IAZ) and an active state (AZ),
   - having an electrical low-voltage side (4) which can be electrically connected to a low-voltage battery (31) and comprises an H-full-bridge circuit (5) having four low-voltage-side semiconductor switches (5a-5d) which are each designed to be switchable independently of one another between an inactive state (IAZ) and an active state (AZ),
   - wherein the high-voltage side (2) is inductively connected to the low-voltage side (4) by means of an electrical transformer (10) for electrical power transmission between the high-voltage side (2) and the low-voltage side (4).

2. The power converter according to claim 1, **characterized in that**

   - the high-voltage side (2) comprises a high-voltage connection (6), electrically connected to the high-voltage-side H-full bridge circuit (3), for connecting the high-voltage battery (30); or/and **in that**
   - the low-voltage side (4) comprises a low-voltage terminal (7) electrically connected to the low-voltage-side H-full bridge circuit (3) for connecting the low-voltage battery (31).

3. The power converter according to claim 1 or 2, **characterized in that** an inductance ($L_R$) and a capacitance ($C_R$) are electrically arranged in series with each other between the high-voltage side H-full bridge circuit (3) and the transformer (10).

4. The power converter arrangement (25),

   - having a (first) DC-DC electrical power converter (1) according to one of the preceding claims,
   - with a (first) high-voltage electrical battery (30) electrically connected to the high-voltage side (2) and with a low-voltage electrical battery (31) electrically connected to the low-voltage side (3).

5. The power converter arrangement according to claim 4,

   **characterized in that**
   a high-voltage-side filter device (32) for filtering electrical voltage peaks is arranged between the (first) high-voltage battery (30) and the high-voltage-side H-full bridge circuit (3); or/and **in that** a low-voltage filter device (33) for filtering electrical voltage peaks is arranged between the low-voltage battery (31) and the low-voltage H-full bridge circuit (5).

6. The power converter arrangement according to claim 4 or 5, **characterized in that** the arrangement (25) comprises a second DC-DC electrical power converter (1') according to any one of claims 1 to 3,

- the high voltage side (2) of the first DC-DC electrical power converter (1) including the high voltage battery (30) is electrically connected to the low voltage side (4') of the second DC-DC power converter (1'),
- the power converter arrangement (25) further comprises an additional electric high-voltage battery (30') electrically connected to the high-voltage side (2') of the second electric DC-DC power converter (1').

7. The power converter arrangement according to claim 4 or 5,
**characterized in that**
a second electrical DC-DC power converter (1') according to one of claims 1 to 3 is arranged electrically in parallel with the low-voltage battery (31) in the low-voltage side (4), which second electrical DC-DC power converter (1') is electrically connected with its high-voltage side (2') to the transformer (10) of the first electrical DC-DC power converter (1) and is electrically connected with its low-voltage side (4') to an electrical energy source (26).

8. A method of operating a DC-DC power converter (1) according to any one of claims 1 to 3 or a power converter arrangement (25) according to any one of claims 4 to 7,

- according to which the power converter (1) is switched to a first or second operating mode for transferring electrical power from the low-voltage side (4) to the high-voltage side (2) and is switched to a third operating mode for transferring electrical power (P3) from the high-voltage side (2) to the low-voltage side,
- wherein both in the first and in the second operating mode the power transmission takes place by means of pulse width modulation by corresponding switching of the four low-voltage-side semiconductor switches (5a-5d) between their inactive and active state (IAZ, AZ),
- wherein, in the first operating mode, all four semiconductor switches (3a-3d) of the high-voltage side are switched to the inactive state (IAZ) so that the high-voltage side H-full bridge circuit (3) functions as a (diode) rectifier,
- wherein, in the second operating mode, a first (3a) and a second (3b) of the four semiconductor switches (3a-3d) of the high-voltage side (2) are switched to the inactive state (IAZ) and a third (3c) and a fourth (3d) of the four semiconductor switches (3a-3d) of the high-voltage side (2) are switched between the inactive state (IAZ) and the active state (AZ) by means of pulse-width modulation,
- wherein, in the third operating mode, the electrical power transmission is performed by means of pulse width modulation by correspondingly switching the four high-voltage-side semiconductor switches (3a-3d) between their inactive and active states (IAZ, AZ),
- wherein, in the third operating mode, all four semiconductor switches (5a-5d) of the low-voltage side are switched to the inactive state (IAZ) so that the high-voltage side H-full bridge circuit (3) functions as a diode rectifier.

9. The Method according to claim 8,
**characterized in that**
in the first operating mode:

- the switching of the four low-voltage-side semiconductor switches (5a-5d) takes place with a predetermined frequency ($f_{SW\_LV}$),
- a time period ($t_\phi$) elapsing between the switching of the first low-voltage-side semiconductor switch and the second low-voltage-side semiconductor switch (5a, 5b) is set such that the phase shift (D) between the switching is at most 180°.

10. The Method according to claim 8 or 9,
**characterized in that**
in the second operating mode:

- the switching of at least the first (5a) and the second (5b) of the four low-voltage side semiconductor switches (5a-5d) takes place with a predetermined frequency ($f_{SW\_LV}$),
- the time period ($t_\phi$) which elapses between the switching of the first low-voltage-side semiconductor switch (5a) and the second low-voltage-side semiconductor switch (5b) is fixed such that the phase shift (D) between the switching is approximately 180°,
- the third and fourth high-voltage side semiconductor switches (3c, 3d) are switched at a frequency ($f_{SW\_HV}$) which is twice the frequency ($f_{SW\_LV}$) at which the first and second low-voltage side semiconductor switches (5a, 5b) are switched.

11. The Method according to any one of claims 8 to 10,

**characterized in that**
in the first and second operating mode
the predetermined frequency ($f_{SW\_LV}$) is set in each case such that

$$f_{SW\_LV} > \frac{1}{2 \cdot \pi \cdot \sqrt{L_R \cdot C_R}}$$

is satisfied, wherein LR is an inductance and CR is a capacitance electrically connected in series with each other between the H-full bridge circuit (3) and the transformer (10).

12. The Method according to any one of claims 8 to 11 for operating the arrangement (25) according to claim 6,
according to which both power converters (1, 1') are operated in the first operating mode until a battery voltage of the high-voltage battery (30, 30') of the first or second power converter (1, 1') has reached a predetermined threshold value, wherein upon reaching or exceeding the threshold value the respective power converter is switched to the second operating mode.

13. The Method according to any one of claims 8 to 11 for operating the arrangement (25) according to claim 7,
according to which both power converters (1, 1') are operated in the first operating mode until a battery voltage of the high-voltage battery (30, 30') of the first or second power converter (1, 1') has reached a predetermined threshold value, the relevant power converter (1, 1') being switched over to the second operating mode when the threshold value is reached or exceeded.

Fig. 1

Fig. 2

Fig. 3

Fig. 4

Fig. 5

Fig. 6

Europäisches
Patentamt
European
Patent Office
Office européen
des brevets

**EUROPEAN SEARCH REPORT**

Application Number

EP 23 17 6576

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/399644 A1 (NISHIKAWA YUKIHIRO [JP]) 23 December 2021 (2021-12-23) * abstract * * paragraph [0006] – paragraph [0098]; figures 1-19 * | 1-13 | INV. H02M3/335 H02M3/00 |
| X | US 2019/288607 A1 (ZONG SHENG [CN] ET AL) 19 September 2019 (2019-09-19) * abstract * * paragraph [0010] – paragraph [0041]; figures 1-4B * | 1-7 | |

TECHNICAL FIELDS
SEARCHED (IPC)

H02M

The present search report has been drawn up for all claims

| Place of search | Date of completion of the search | Examiner |
|---|---|---|
| The Hague | 3 October 2023 | Adami, Salah-Eddine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# EP 4 287 485 A1

## ANNEX TO THE EUROPEAN SEARCH REPORT
## ON EUROPEAN PATENT APPLICATION NO.

EP 23 17 6576

This annex lists the patent family members relating to the patent documents cited in the above-mentioned European search report.
The members are as contained in the European Patent Office EDP file on
The European Patent Office is in no way liable for these particulars which are merely given for the purpose of information.

03-10-2023

| Patent document cited in search report | | Publication date | Patent family member(s) | | Publication date |
|---|---|---|---|---|---|
| US 2021399644 | A1 | 23-12-2021 | CN | 113904556 A | 07-01-2022 |
| | | | DE | 102021110098 A1 | 23-12-2021 |
| | | | FR | 3111752 A1 | 24-12-2021 |
| | | | JP | 2022002454 A | 06-01-2022 |
| | | | KR | 20210157856 A | 29-12-2021 |
| | | | US | 2021399644 A1 | 23-12-2021 |
| US 2019288607 | A1 | 19-09-2019 | CN | 110168896 A | 23-08-2019 |
| | | | EP | 3577752 A1 | 11-12-2019 |
| | | | US | 2019288607 A1 | 19-09-2019 |
| | | | WO | 2018141092 A1 | 09-08-2018 |

EPO FORM P0459